Europäisches Patentamt

**European Patent Office**

Office européen des brevets

(11) Publication number: **0 169 673**

**A1**

(12) **EUROPEAN PATENT APPLICATION**

(21) Application number: **85304514.4**

(22) Date of filing: **25.06.85**

(51) Int. Cl.⁴: **H 05 B 41/29**

(30) Priority: **25.06.84 GB 8416153**

(43) Date of publication of application:
**29.01.86 Bulletin 86/5**

(84) Designated Contracting States:
**DE GB**

(71) Applicant: **TRANSTAR LIMITED**
**Victoria Industrial Estate Victoria Road West**
**Hebburn Tyne and Wear, NE31 1UB(GB)**

(72) Inventor: **Piaskowski, Andrew Dionizy**
**10, Romford Close Barns Park**
**Cramlington Northumberland(GB)**

(74) Representative: **George, Sidney Arthur et al,**
**GILL JENNINGS & EVERY 53-64 Chancery Lane**
**London WC2A 1HN(GB)**

(54) **Power supply with power factor correction.**

(57) A power supply circuit for feeding a load (1,2), such as one or more fluorescent lamps, from an alternating current source (5) comprises a first bridge rectifier circuit (4) for connection to the a.c. source to provide a unidirectional current supply, and a half-bridge inverter (3) which passes a cylically-reversing current through a load supply circuit (17,19) from the unidirectional supply. For power factor correction, the primary winding (18) of a voltage transformer (19) is connected in the load supply circuit, and the secondary winding (92) of the transformer is coupled to a second bridge rectifier circuit (80) which is connected in series between the first bridge rectifier circuit and the unidirectional supply. Magntic amplifier means (82,83) is connected in series with the secondary winding of the voltage transformer. A current transformer (90) monitors the current flowing from the source, and the monitored current is compared with the current in the load supply circuit. An error signal is derived from the comparison to control the level of magnetisation of the magnetic amplifier means, so that the secondary winding of the voltage transformer extracts current from the a.c. supply, in dependence upon the error signal, to improve the form factor of the current taken from the source. A saturable transformer (17) feeds the lamps, and the level of magnetisation of the transformer can be varied by adjustment of a variable resistance network (71,72), so that the brightness of the lamps can be varied.

./...

Croydon Printing Company Ltd.

Fig .1.

TRANSTAR LIMITED                    31/2097/01

POWER SUPPLY WITH POWER FACTOR CORRECTION

This invention relates to power supplies in which power factor correction is effected, and relates particularly, but not exclusively, to switched mode power supplies for supplying power to discharge lamps, such as fluorescent lamps.

Switched-mode power supply circuits for operating fluorescent lamps have previously been proposed in which thyristors, silicon controlled rectifiers (SCRs), bipolar transistors or power FETs are used to pass an alternating current through a transformer to which one or more lamps are connected.

A disadvantage of prior circuits has been the low power factor which such circuits present to the supply mains. Our British Patent Application No. 8303499 discloses power supply circuits which provide power factor correction, and the present invention provides a further form of such circuit.

According to the invention, a power supply circuit which is to be connected between an alternating current source and a load comprises a first bridge rectifier circuit for connection to the a.c. source to provide a unidirectional current supply therefrom; switching means operative to pass a cyclically reversing current through a load supply circuit from the unidirectional supply; a primary winding of a voltage transformer connected in the load supply circuit; a second bridge rectifier circuit connected in series between the first bridge rectifier circuit and the unidirectional supply; a secondary winding of the voltage transformer coupled to the second bridge rectifier circuit; magnetic amplifier means connected in series with the secondary winding of the voltage transformer; means to monitor the current flowing from the source; and means to compare said current with the current in the load supply circuit and to derive from the comparison an error signal to control the level of magnetisation of the magnetic amplifier, whereby the secondary winding of the voltage transformer extracts current from the a.c. supply in dependence upon the error signal to improve the form factor of the current taken from the source.

An embodiment of the invention will now be described, by way of example, with reference to the accompanying drawings, in which:

Figure 1 is a circuit diagram of a switch mode power supply for supplying power to fluorescent lamps;

Figure 2 illustrates waveforms occurring in the circuit of Figure 1;

Figure 3 is a simplified schematic diagram for use in explaining the theory of the power factor correction circuit; and

Figure 4 illustrates current and voltage waveforms.

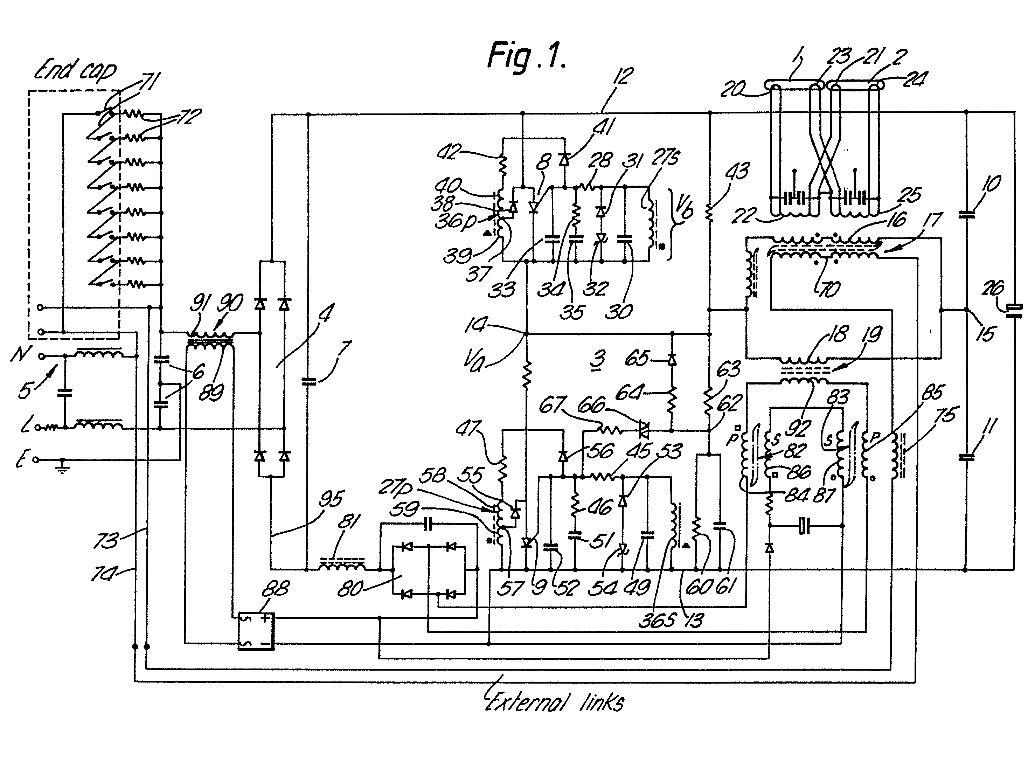

Referring to Figure 1 of the drawings, a power supply circuit for supplying power to lamps 1 and 2 comprises a half-bridge inverter 3 which is energised by power from a bridge rectifier circuit 4. The circuit 4 is connected to an alternating current mains supply 5. Capacitors 6 and 7 help to suppress mains-borne interference.

The inverter 3 comprises series-connected silicon controlled rectifiers (SCRs) 8 and 9 and series-connected capacitors 10 and 11 between positive and negative d.c. supply lines 12 and 13. The anode of the SCR 9 and the cathode of the SCR 8 are interconnected at a junction 14, and the capacitors 10 and 11 are interconnected at a junction 15. A primary winding 16 of a saturable transformer 17 and a primary winding 18 of a voltage transformer 19 are connected between the junctions 14 and 15.

Heater electrodes 20 and 21 of the lamps 1 and 2, respectively, are connected to tappings on a secondary winding 22 of the transformer 17, and heater electrodes 23 and 24 of the lamps are connected to tappings on a secondary winding 25 of the transformer 17. The d.c. supply is smoothed by a capacitor 26.

In operation of the circuit so far described, the capacitors 10 and 11 are charged from the d.c. supply lines 12 and 13, and are alternately discharged through the transformer windings 16 and 18, via the switching SCRs 9 and 8 which are fired alternately by circuitry which will be described later. An alternating current therefore flows through these transformer windings.

The capacitors 10 and 11 and the windings of the transformers 17 and 19 together form a resonant circuit at the operating frequency of the inverter, which may, for example, be in the 20KHz to 25KHz range. The current through the windings is, therefore, substantially sinusoidal. Resonance in the circuit causes a voltage to be generated across the winding 16 such that a relatively high voltage is applied between the electrodes 20 and 23 and between the electrodes 21 and 24. Heating current flows through the electrodes from the respective sections of the windings 22 and 25. The high voltage produced on the secondary windings causes ionisation of the gas in the lamps, and the lamps light. Once the lamps have struck, the voltage between the electrodes falls to the normal lamp running voltage, which is determined by the lamp characteristic. The relatively low impedance of the lamps when struck damps the resonant circuit.

The circuit for firing the SCR 8 includes a transformer secondary winding 27S, one end of which is connected to the cathode of the SCR. The other end of the winding is connected via a resistor 28 to the gate of the SCR. A capacitor 30 is connected across the winding 27S, as are a diode 31 in series with a zener diode 32. A capacitor 33 is connected between the gate and the cathode of the SCR 8, together with a resistor 34 and a capacitor 35 in series. A transformer primary winding 36P has a tapping 37 to which the anode of a diode 38 is connected. The cathode of the diode 38 is connected to the d.c. positive line 12. The winding 36P is divided into two sections 39 and 40 by the tapping 37. The free end of the section 39 is connected to the cathode of the SCR 8, and the free end of the section 40 is connected to the cathode of a diode 41 via a resistor 42. The anode of the diode 41 is connected to the gate of the SCR 8. A resistor 43 is connected between the line 12 and the junction 14.

The firing circuit for the SCR 9 has resistors 45-47, capacitors 49, 51 and 52 and diodes 53-56 which correspond to the components in the SCR 8 circuit. A transformer winding 36S which corresponds to the winding 27S of the latter circuit is magnetically coupled to the winding 36P. A winding 27P which corresponds to the winding 36P is magnetically coupled to the winding 27S. The winding 27P has a tapping 57 which divides the winding into sections 58 and 59. The SCR 9 firing circuit has additional components for starting up the circuit when the apparatus is first switched on. These components comprise a capacitor 61 and a resistor 60 connected in parallel between a junction 62 and the negative d.c. line 13; a resistor 63 connected between the junctions 62 and 14; a resistor 64 and a diode 65 connected in series between those junctions; and a diac 66 and a resistor 67 connected in series between the junction 62 and the gate of the SCR 9.

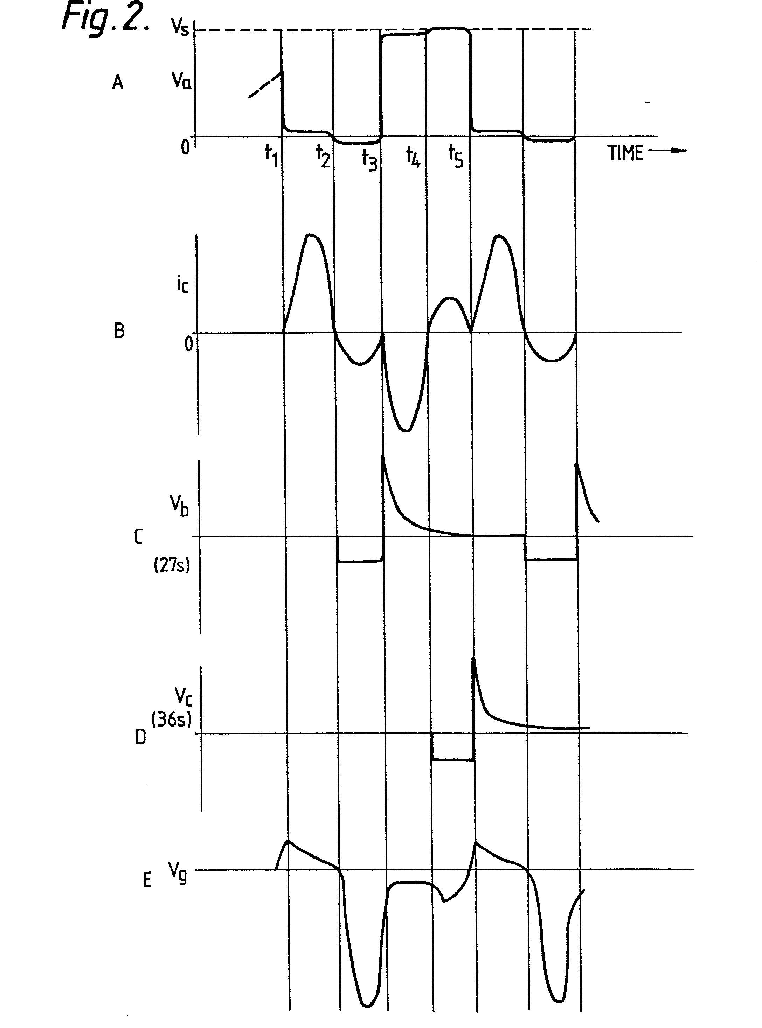

The switching action of the SCRs will now be described. When the supply is first switched on, the potential of the junction 14 rises to a level between the potentials of the positive and negative lines 12 and 13, due to the potential dividing action of the resistors 60, 63 and 43 and the capacitor 61. The capacitor 61 charges up, and when the voltage at the junction 62 reaches the breakover voltage of the diac 66 the diac conducts and a trigger signal is supplied to the gate of the SCR 9 at a time $t_1$, and the SCR is fired. The voltage $V_a$ at the junction 14 falls substantially to zero, as shown in Figure 2A. Current $i_c$ flows from the capacitors 10, 11, and through the windings 18 and 16 in parallel and the SCR 9 to the line 13. Due to the resonant nature of the circuit, the current rises substantially sinusoidally to a peak and then falls to zero at a time $t_2$, causing commutation of the SCR 9 to begin. The current then overshoots and reverses, as shown in Figure 2B, the "free-wheel" diode 55 providing a path for the reverse current from the line 13, through the section 59 of the winding 27P, to the junction 14. The voltage $V_a$ also overshoots and becomes negative. The reverse current produces a magnetic flux in the core of the transformer formed by the windings 27P and 27S, so that a voltage $V_b$ (Figure 2C) is induced across the winding 27S. The phasing of the windings is such that the voltage $V_b$, at this point in time, is negative at the upper end of the winding 27S as viewed in Figure 1. The voltage is clamped by the diodes 31 and 32. This negative voltage is applied to the gate of the SCR 8 with respect to its cathode. At the same time, a negative voltage is induced in the section 58 of the winding 27P. This is applied via the diode 56 and the resistor 47 to the gate of the SCR 9 to speed up the commutation.

At a time $t_3$ the reverse current flow in the winding 27P reaches zero, and the magnetic flux in the transformer core collapses. This causes a relatively large "flyback" voltage to be induced in the winding 27S, making the upper end of the winding positive. This applies a gating pulse to the SCR 8. The SCR fires, and the current $i_c$ starts to flow through the SCR and the transformer windings 16 and 19 from the line 12 into the capacitors 10, 11. The current between the time $t_3$ and $t_4$ has the same waveform as between the times $t_1$ and $t_2$, but flows in the opposite direction. The voltage $V_a$ at the junction 14 rises at $t_3$ to a level which is less than the d.c. supply voltage $V_s$ by an amount equal to the voltage drop across the conducting SCR 8. $V_a$ stays at that level until the time $t_4$, and then overswings as the SCR 8 turns off. The current $i_c$ overswings from the time $t_4$ to a time $t_5$, similarly to $t_2$ to $t_3$ but in the opposite direction of flow, the reverse current flowing through the free wheel diode 38 and the section 39 of the winding 36P. Just as explained above for the transformer 27P, 27S, a negative voltage $V_c$ (Figure 2D) is induced across the secondary winding 36S, holding the SCR 9 off. A negative voltage is induced in the winding section 40 which speeds up the commutation of the SCR 8. When the reverse current falls to zero at the time $t_5$, the magnetic field in the transformer core collapses. A positive voltage is induced in the winding 36S, turning on the SCR 9. The inverter continues to operate cyclically in this manner.

The shape of the voltage $V_g$ applied to the gate of the SCR 9 is shown in Figure 2E. The voltage applied to the gate of the SCR 8 will be the same, but displaced in time.

It should be noted that each SCR is turned off and the other turned on at instants when the current i is at zero. Hence, a great reduction in radio-frequency interference is achieved.

The circuit comprising the diac 66, the resistors 60, 63 and 67 and the capacitor 61 is operative, as previously explained, to ensure that the SCR 9 turns on soon after the supply 5 has been connected to the apparatus. However, it is essential that that circuit shall not operate again during the cycling of the inverter, otherwise miscommutation of the SCR 9 would occur. The resistor 64 and the diode 65 ensure that that circuit remains inoperative by discharging the capacitor 61 every time the voltage $V_a$ of the junction 14 goes to zero. The voltage of the junction 62 cannot, therefore, rise sufficiently to fire the diac 66.

As is well-known, some SCRs are prone to arbitary firing due to the parasitic capacitance between the anode and the gate. If, at switching off, the rate of change of the anode/cathode voltage is high, sufficient current can be fed into the gate through the capacitance to cause the SCR to fire again. This must be prevented, and in the present circuit the networks 34, 35 and 46, 51 are provided to apply a negative bias to the gate of the respective SCR to prevent this occurring.

The capacitors 33 and 52 act as decoupling capacitors to smooth out noise spikes which may appear in the respective SCR gating circuits, and which could otherwise cause unwanted firing of the SCRs.

The transformers 27P, 27S and 36P, 36S can comprise windings on quite small, low-permeability toroidal cores, or on ferrite cores with gaps to reduce their effective permeabilities. If the inverter is overloaded by the connection of too many lamps thereto, the freewheel current will be reduced and will cause a reduction of energy in the cores of the transformers, so that SCR firing pulses will not be delivered by the secondary windings 27S and 36S. Cycling of the inverter will therefore cease, and overload protection is thereby provided.

Figure 1 shows, by way of example, two lamps connected to the transformer 17. The combined secondary circuits of the transformer 17 will reflect a particular inductance into the primary winding 16, and the resultant inductance at the terminals of the primary winding, together with the reactances of the transformer 19 and the capacitors 10 and 11 will determine the resonant frequency of the inverter. The inverter will therefore switch at a given frequency.

If, now, one of the lamp circuits be disconnected, the resultant inductance at the transformer primary terminals will be increased, and the inverter switching frequency will decrease. This will reduce the inductive reactance of the transformers, and the current flowing through the primary winding 16 of the transformer 17 will decrease. By suitable design of the transformer 17, it can be achieved that the decreased current through the transformer impedance results in a reduction in the current in the transformer primary winding 16, and hence the same current is fed to the single lamp as would be fed to each of the previously-mentioned two lamps at the higher switching frequency.

Similarly, the inverter can be loaded up with more lamp circuits, as required until the overload point is reached and the cycling of the inverter stops, as explained previously. The more lamps supplied by the circuit, the higher the switching frequency.

When the supply is first switched on, the voltage (e.g. 800 volts) produced at resonance will appear across the secondary windings 22 and 25, and a fraction of this (say, 6 volts) is tapped off at each end of the windings for the lamp heaters, the fraction being determined by the turns ratios. The heaters ensure that enough free electrons are produced at each cathode to provide the required conduction through the gas, without stripping ions from the cathodes. Such ion stripping could otherwise cause premature failure of the lamp. Once the lamp 1 or 2 has fired, the voltage across the respective secondary winding 22 or 25 will be held at the running voltage across the discharge in the lamp (e.g. 120 volts).

The circuit so far described is similar to that disclosed in our above-mentioned British Patent Application No. 8303499, and reference should be made to that application for a detailed explanation of the theory of the power factor correction.

Dimming of the lamps in the present circuit can be effected by adjusting the current fed to a control winding 70 of the transductor 17. This current is controlled by a network of cascaded switches 71 and associated resistors 72, which network is connected to the winding 70 via links 73 and 74 and a choke 75. The level of magnetisation of the transformer 17 can be controlled, stepwise, by closing selected ones of the switches 71. This varies the effective impedance of the winding 16 and, hence, varies the lamp current and the resultant brightness of the lamps. It will be seen that the winding 70 is connected in series with the main power feed from the supply 5 into the bridge 4. The level of magnetisation of the transformer 17 therefore depends on both the current fed to the system and the settings of the switches 71 which connect the resistors 72 selectively across the winding 70. The passage of the main current through the winding 70 provides a measure of negative feedback, which helps to stabilise the operation of the circuit.

The transformer 19 effects the power factor correction, in conjunction with a diode bridge 80 and a choke 81 which are connected in series between the negative output terminal 95 of the bridge 4 and the negative supply line 13, and two magnetic amplifiers 82 and 83, primary windings 84 and 85 of which are connected, in series with the secondary winding 92 of the transformer 19, across the other diagonal of the bridge. Secondary windings 86 and 87 of the magnetic amplifiers are connected in antiphase across the output of a rectifier bridge 88, the input of which is supplied by the secondary winding 89 of a transformer 90. The primary winding 91 of the transformer is connected between the mains supply and the rectifier bridge 4. The magnetic amplifiers 82 and 83 could be combined into a single component, but are preferably separated, as shown, for R.F. interference suppression purposes.

In order to achieve a unity power factor, two conditions must be satisfied. The current taken from the supply system by the load must be in phase with the supply voltage, and the form factor of the current waveform must be correct.

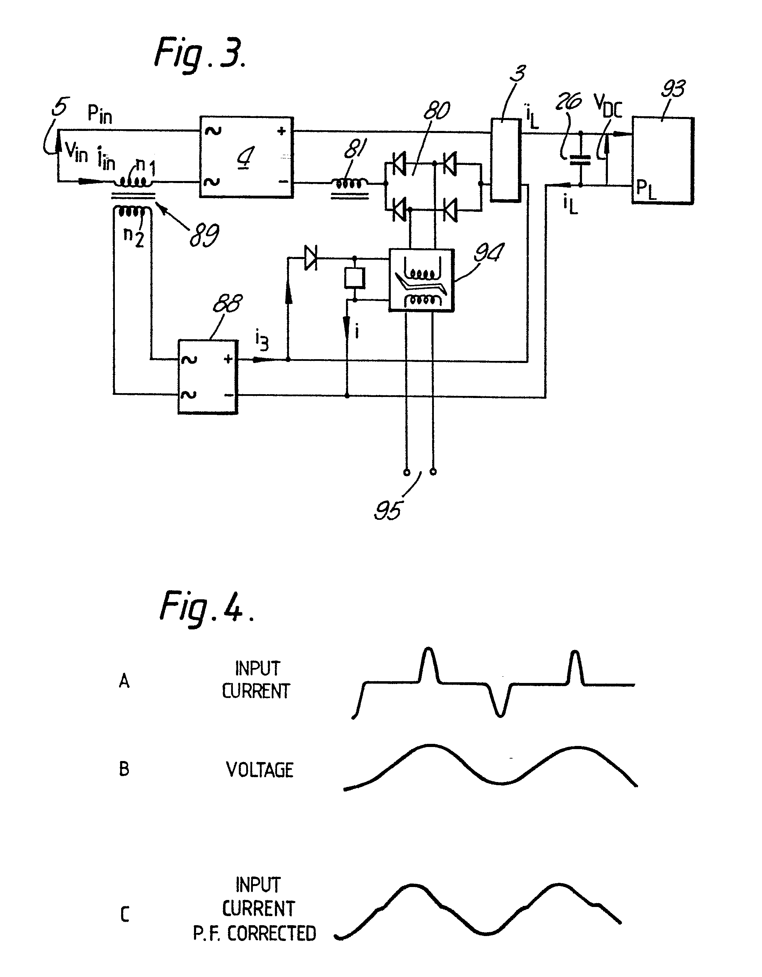

The current and voltage waveforms of a switched mode power supply without power factor correction are illustrated in Figure 4. It will be seen that the current waveform (Figure 4A) comprises a series of peaks. Although these peaks are almost in phase with the peaks of the supply voltage (Figure 4B), the form factor of the current waveform is very high, say 2 to 3. The power factor is therefore very low, say 0.5.

Some known circuits have included complicated and/or undesirably large filter components in order to improve the power factor. The transformer 19, the bridge 80, the choke 81 and the amplifiers 82 and 83 of the present invention provide a much improved means for power factor correction. The use of the power factor correction circuit is not confined to inverters for lamp operation.

Basic components of the power factor correction circuit are shown schematically in Figure 3 of the drawings for explanation purposes. The a.c. supply 5 feeds the bridge rectifier 4, which supplies the inverter 3 via the bridge 80 and the choke 81. The load comprising the transformer 16 and the lamps 1 and 2 is represented by a block 93. The saturable reactors 82 and 83 are together represented by a block 94. Terminals 95 represent the connection to the winding 92 of the transformer 19.

The effect of the transformer 90 and the bridge 88 is to produce an output current which is proportional to the current which has to be taken from the supply 5 in order to cause a particular power-factor-corrected current to flow in the load circuit 92.

The turns ratio required for the transformer 90 can be derived from the following theory, wherein

$n_1$ is the number of turns on the primary winding of the transformer 90,

$n_2$ is the number of turns on the secondary winding 89,

$V_{in}$ is the supply voltage,

$i_{in}$ is the input current from the supply 5,

$P_{in}$ is the input power from the supply,

$V_{DC}$ is the voltage across the load circuit,

$i_L$ is the load current after power factor correction,

$P_L$ is the power fed to the load,

$i_2$ is the current flowing in the secondary winding

$i_3$ is the current flowing in the output of the bridge 88, and

$i$ is an error signal which is used to control the magnetisation of the transformers 84 and 85 to achieve the load current $i_L$

The current $i$ into the magnetic amplifier 94 is given by

$$i = i_3 - i_L \qquad\qquad (i)$$

Let the gain of the magnetic amplifier be G,

then $\quad iG = i_L$

or $\quad i = \dfrac{i_L}{G}$ $\qquad\qquad$ (ii)

Substituting (ii) in (i),

$$\frac{i_L}{G} = i_3 - i_L \qquad\qquad \text{(iii)}$$

The rms secondary current $i_2 = \dfrac{n_1}{n_2} \cdot i_{in}$

The bridge 88 effects an rms to average transformation to provide the current $i_3$

Therefore, $i_3 = .63\sqrt{2}\ \dfrac{n_1}{n_2} \cdot i_{in} = 0.9\ \dfrac{n_1}{n_2} \cdot i_{in}$ $\quad$ (iv)

Hence, from (iv) and (iii),

$$\frac{i_L}{G} + i_L = 0.9\ \frac{n_1}{n_2}\ i_{in}$$

or $\quad \dfrac{i_L}{0.9 i_{in}}\ \dfrac{(1+G)}{G} = \dfrac{n_1}{n_2}$ $\qquad\qquad$ (v)

For $V_{DC}$ to remain constant

$$P_{in} = P_L$$

Hence $V_{in}\ i_{in}$ rms $= V_{DC}\ i_L$ $\qquad\qquad$ (vi)

Since, after power factor correction $\sqrt{2}V_{in} = V_{DC}$

then, $\dfrac{V_{DC}}{\sqrt{2}}\ i_{in}$ rms $= V_{DC} i_L$

or $\quad \dfrac{i_L}{i_{in}} = \dfrac{1}{\sqrt{2}}$ $\qquad\qquad$ (vii)

Substituting (vii) into (v), we have

$$\frac{0.9}{\sqrt{2}}\ \frac{(1+G)}{G} = \frac{n_1}{n_2} \qquad\qquad \text{(viii)}$$

If G is large, then for good regulation

$$\frac{n_1}{n_2} \rightarrow \frac{0.9}{\sqrt{2}}$$

Hence, by monitoring the input current using a current transformer 90 of ratio $n_1/n_2$ determined as above; by comparing the load current with the monitored input current to produce an error signal; and by using that error signal to control the magnetisation of the magnetic amplifiers 82, 83 connected in series with the secondary winding 92 of the power factor correcting transformer 19, the correct amount of auxiliary current can be drawn from the bridge 80 to effect power factor correction.

The current waveform obtained for the circuit of the present invention, showing the effect of the power factor correction is illustrated in Figure 4C. It will be seen that the current waveform is substantially sinusoidal and is in phase with the mains voltage (Figure 4B).

## CLAIMS

1. A power supply circuit which is to be connected between an alternating current source (5) and a load (1,2), characterised by a first bridge rectifier circuit (4) for connection to the a.c. source to provide a unidirectional current supply therefrom; switching means (3) operative to pass a cyclically reversing current through a load supply circuit (17) from the unidirectional supply; a primary winding (18) of a voltage transformer (19) connected in the load supply circuit; a second bridge rectifier circuit (80) connected in series between the first bridge rectifier circuit and the unidirectional supply; a secondary winding (92) of the voltage transformer coupled to the second bridge rectifier circuit; magnetic amplifier means (82,83) connected in series with the secondary winding of the voltage transformer; means (90) to monitor the current flowing from the source; and means (88) to compare said current with the current in the load supply circuit and to derive from the comparison an error signal to control the level of magnetisation of the magnetic amplifier, whereby the secondary winding of the voltage transformer extracts current from the a.c. supply in dependence upon the error signal to improve the form factor of the current taken from the source.

2. A circuit as claimed in claim 1, characterised in that the means (90) to monitor the current flowing from the source comprises a current transformer having a primary winding (91) through which current from the a.c. source (5) flows to the first bridge rectifier (4).

3. A circuit as claimed in claim 1 or claim 2, characterised in that the means to compare the current includes a third bridge rectifier circuit (88) coupled to a secondary winding (89) of the current transformer (90).

4. A circuit as claimed in any one of claims 1-3, characterised in that the switching means (3) comprises a half-bridge inverter.

5. A circuit as claimed in claim 4, characterised in that the inverter (3) includes silicon controlled rectifier switching elements (8,9).

6. A circuit as claimed in claim 4 or claim 5, characterised in that the inverter (3) includes two capacitors (10,11) which are alternately charged from the unidirectional current supply and are alternately discharged through the load supply circuit (17); and in that the capacitors and the transformer windings (16,70;18,92) in the load supply circuit together form a resonant circuit at the operating frequency of the inverter.

7. A circuit as claimed in claim 1, characterised in that the switching means (3) comprises first and second semiconductor switching devices (8,9) connected in series across the unidirectional supply with a junction (14) therebetween; load supplying means (17) connected to the junction; and means to switch the devices on alternately to supply the cyclically reversing current to the load, said means comprising a first triggering transformer (36) having a primary winding section (36P) arranged to pass free wheel current during commutation of the first device (8), and a secondary winding (36S) coupled to a control electrode of the second device (9) so that cessation of the free wheel current through the primary winding section of the first triggering transformer induces a signal in the secondary winding for switching the second device; and a second triggering transformer (27) having a primary winding section (27P) arranged to pass free wheel current during commutation of the second device (9), and a secondary winding (27S) coupled to a control electrode of the first device (8) so that cessation of the free wheel current through the primary winding section of the second triggering transformer induces a signal in the secondary winding for firing the first device.

8. A circuit as claimed in claim 7, characterised in that a respective diode (38;55) is connected in series with each primary winding section to ensure that only free wheel current flows therethrough.

9. A circuit as claimed in claim 7 or claim 8, characterised by an auxiliary firing circuit (60,61,66,67) coupled to the gate of one of said devices (9) for switching that device to initiate the alternate switching of the devices; and means (64,65) operative whilst the alternate switching is proceeding to disable the auxiliary firing circuit.

10. A circuit as claimed in any one of claims 7-9, characterised in that the first triggering transformer (36) includes a further winding (40) which is operative during the passage of free wheel current through the primary winding section (36P) to apply a negative voltage to the control electrode of the first device (8) to speed up the commutation of that device; and the second triggering transformer (27) includes a further winding (58) which is operative during the passage of free wheel current through the primary winding section (27P) to apply a negative voltage to the control electrode of the second device (9) to speed up the commutation of that device.

11. A circuit as claimed in any preceding claim, characterised in that the load supply circuit includes a saturable transformer (17) for feeding the load (1,2); and means (71,72) to adjust the saturation level of the saturable transformer to vary the magnitude of the current fed to the load.

12. A circuit as claimed in claim 11, characterised in that the means to adjust the saturation level comprises resistance means (72) the resistance value of which is adjustable in steps.

13. A circuit as claimed in any preceding claim, characterised in that the magnetic amplifier means comprises two magnetic amplifiers (82,83) the windings of which are interconnected in antiphase.

14. A power supply circuit substantially as hereinbefore described with reference to the accompanying drawings.

15. A lighting installation including a power supply circuit as claimed in any preceding claim.

0169673

Fig.1.

Fig.2.

2/3

0169673

Fig.3.

Fig.4.

| A | INPUT CURRENT |
| B | VOLTAGE |
| C | INPUT CURRENT P.F. CORRECTED |

0169673

3/3

# European Patent Office

**0169673**

Application number

# EUROPEAN SEARCH REPORT

EP  85 30 4514

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | GB-A-2 115 627  (TRANSTAL LTD.) <br> * Page 1, line 63 - page 3, line 14 * <br><br> ----- | 1,4-7 | H 05 B  41/29 |
| | | | **TECHNICAL FIELDS SEARCHED (Int Cl 4)** <br><br> H 05 B <br> G 05 F <br> H 02 M |

The present search report has been drawn up for all claims

| Place of search | Date of completion of the search | Examiner |
|---|---|---|
| THE HAGUE | 26-09-1985 | KERN H. |